(19) Europäisches Patentamt
European Patent Office
Office européen des brevets

(11) **EP 1 953 501 A2**

(12) **EUROPEAN PATENT APPLICATION**

(43) Date of publication:
**06.08.2008 Bulletin 2008/32**

(51) Int Cl.:
***G01C 21/26*** *(2006.01)* ***G01C 21/36*** *(2006.01)*

(21) Application number: **08250354.1**

(22) Date of filing: **30.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **02.02.2007 GB 0702097**

(71) Applicant: **Satmap Systems Ltd.**
**Esher, Surrey KT10 9RX (GB)**

(72) Inventor: **Beadman, Mike**
**c/o Cambridge Design Partnership Ltd.**
**Cambridge CB23 2RF (GB)**

(74) Representative: **Beresford, Keith Denis Lewis**
**BERESFORD & Co.**
**16 High Holborn**
**London WC1V 6BX (GB)**

(54) **Map and position display system**

(57)     An electronic map (1) for use by walkers or cyclist is described. The device is arranged to display on a display screen (3) a high resolution map. The device includes a power management system which powers off various portions of the device dependent on whether movement of the device is detected.

Fig.1.

**Description**

The present application concerns a mapping system. More specifically embodiments of the present application concern an electronic map system suitable for use by walkers, cyclists or the like.

Many in-car navigation systems have been developed. Typically, in-car navigation systems are arranged to receive GPS signals from navigation satellites. The GPS signals are then used to identify a position on a vector based map. Typically, the vector based maps represent navigable roads by the means of straight lines appearing on the map. Other features of interest such as petrol stations and service areas may also be marked. Normally, areas of the map which are not accessible by car are left blank.

The existing satellite mapping systems, however, suffer from a number of drawbacks which make them unsuitable for use by walkers and off-road cyclists.

In contrast to car drivers, walkers and off-road cyclists are not constrained to travel along marked roads. Frequently, travel will therefore take place in areas which conventionally in the vector based maps in the prior art are left blank.

Height information is of significant importance for walkers and cyclist as the gradient of a path will affect the speed with which walkers and cyclists travel far greater than degree than it affects car drivers. Often it is preferable for a walker to take a more roundabout route involving fewer changes in height than it is to take a more direct route which often involves a greater number of ascents and descents.

Further, in contrast to drivers, whose navigation is typically constrained to moving in a single direction along a road, walkers and cyclist may frequently stop and attempt to navigate using various landmarks. The fixed viewpoints from existing satellite mapping systems render such landmark base navigation difficult.

In addition to the above problems, any mapping system which is to be carried by a walker or cyclist is required to be both light and portable. To that end it is desirable that the power requirements for such a system are minimised.

Further, it is desirable that any electronic mapping system should be easily updateable. This is particularly the case with mapping systems for use by cyclists and walkers since the amount of detail required by such users for relatively small areas is relatively high. The extent to which updates are required to be made is therefore greater than for the vector based map systems designed purely for on-road navigation.

In view of the above alternative mapping systems are desired which address or alleviate at least some of the above problems.

In accordance with one aspect of the present invention there is provided a mapping system comprising:

> a positioning module operable to receive positioning signals and determine a current position for the mapping system;
> a mapping module operable to process a determined current position for the mapping system and select map data for display; and
> a display screen operable to display an image corresponding to selected map data selected by said mapping module,

characterized in that said mapping system further comprises:

a power management module responsive to receipt of a power off signal to:

> power off said display screen;
> cause said positioning module to maintain a positional lock to receive positioning signals and periodically determine a current location for said mapping system; and
> instruct said positioning module to power off when said positioning module indicates that the location of said mapping system has not changed significantly for more than a predetermined length of time.

In accordance with another aspect of the present invention there is provided a method of storing map data on a secure digital card, the method comprising:

> extracting secure identification data from a secure digital card;
> dispatching said secure identification data together with a request identifying an item of map data to a remote server;
> generating, at said remote server, in response to receipt of secure identification data and a request identifying an item of map data:

>> encrypted map data corresponding to a requested item of map data; and
>> signature data generated using said encrypted map data, a private encryption key and said received secure identification data; and
>> storing said encrypted map data and said signature data on said secure digital card.

In accordance with another aspect there is provided a mapping system comprising:

a positioning module operable to receive positioning signals and determine a current position for the mapping system;
a mapping module operable to process a determined current position for the mapping system and select map data for display;
a display screen operable to display an image corresponding to selected map data selected by said mapping module; and
a compass module operable to determine the current orientation of said mapping system, wherein said mapping module is operable to process map data so as to generate display data wherein displayed map data is orientated on said display screen in an orientation selected on the basis of a current orientation determined by said compass module.

In accordance with yet a further aspect there is provided a mapping system comprising:

a first data store operable to store map data;
a second data store;
a mapping module operable to generate display data utilising data stored in said second data store; and
a user interface operable to enable a user to select a location, wherein said second data store is operable to store map data for an area greater than the area for which said mapping module is operable to generate display data, said mapping system being arranged so that said mapping module is operable to generate display data illustrating a scrolling map based on data stored in said second data store wherein the speed of scrolling is selected so that said speed does not exceed the speed with which data stored in said first data store can be transferred from said first data store to said second data store.

Further aspects and embodiments of the present invention will become apparent with reference to the accompanying drawings in which:

Figure 1 is a plan view of a mapping system in accordance with an embodiment of the present invention;
Figure 2 is a schematic block diagram of the functional modules of the mapping system in Figure 1;
Figure 3 is a schematic block diagram for explaining the apparatus for downloading map data into the mapping system of Figure 1;
Figure 4 is a flow diagram of the processing involved in downloading map data using the system illustrated in Figure 3;
Figure 5 is a flow diagram of the use of the mapping system of Figure 1;
Figure 6 is a flow diagram of the processing undertaken by the mapping system to determine data for display; and
Figure 7 is a flow diagram illustrating the steps involved in determining rotated map data by the mapping system in Figure 1.

## SPECIFIC EMBODIMENT

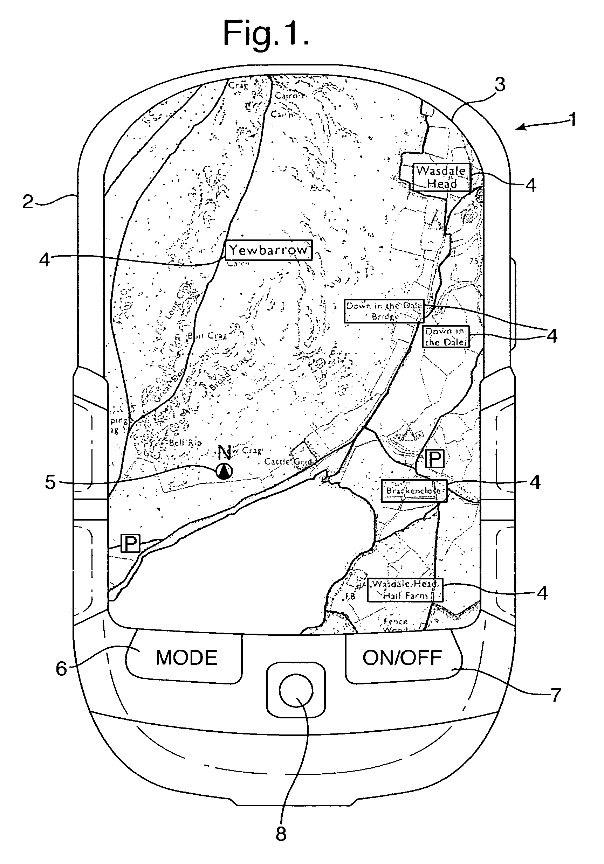

Figure 1 is a plan view of the exterior of a mapping system 1 in accordance with an embodiment of the present invention. Referring to Figure 1, the mapping system 1 comprises a housing 2 in which is mounted a display screen 3. The housing 2 contains a number of functional modules (not shown in Figure 1) which enable the mapping system 1 to generate and display selected map data on the display screen 3.

In this embodiment, the map data which can be displayed comprises a basic low definition map covering a wide area and a high definition raster map illustrating, a detailed representation of an area. The high definition map is such to include roads, contour lines, geographic and other points of interest etc which would ordinarily appear in a detailed walkers map such as is produced by the Ordinance Survey and a section of such a high definition is shown displayed on the display screen 3 of Figure 1.

In the display, some roads, geographic features and other points of interest in the map are labelled with text data 4. As will be explained later, this text data is generated in a manner which causes such labels not to overlap and which causes the text to be orientated so as to be readable when the mapping system 1 is held in a predetermined orientation.

A marker 5 is also displayed on the display screen 3 indicating the current location of the mapping system 1 as determined by receiving and interpreting GPS signals from a GPS satellite. In this embodiment, this marker 5 comprises a marker which also includes a pointer indicating the location of North on the map.

Also provided on the housing 1 is a pair of control buttons 6, 7 and a joystick 8. In this embodiment the control buttons comprise a mode button 6 for selecting different display modes for the system and an on-off button 7. The mapping system 1 is activated by pressing the on-off button 7 which causes the display screen 3 to be switched on and off. When the mapping system 1 is first activated, the map data illustrated on the display screen 3 is selected to be centred on the current location for the mapping system 1 as identified through a GPS signal. Using the joystick 8 information on the map can be scrolled so as to view portions of the map that are not initially displayed on the display screen 3.

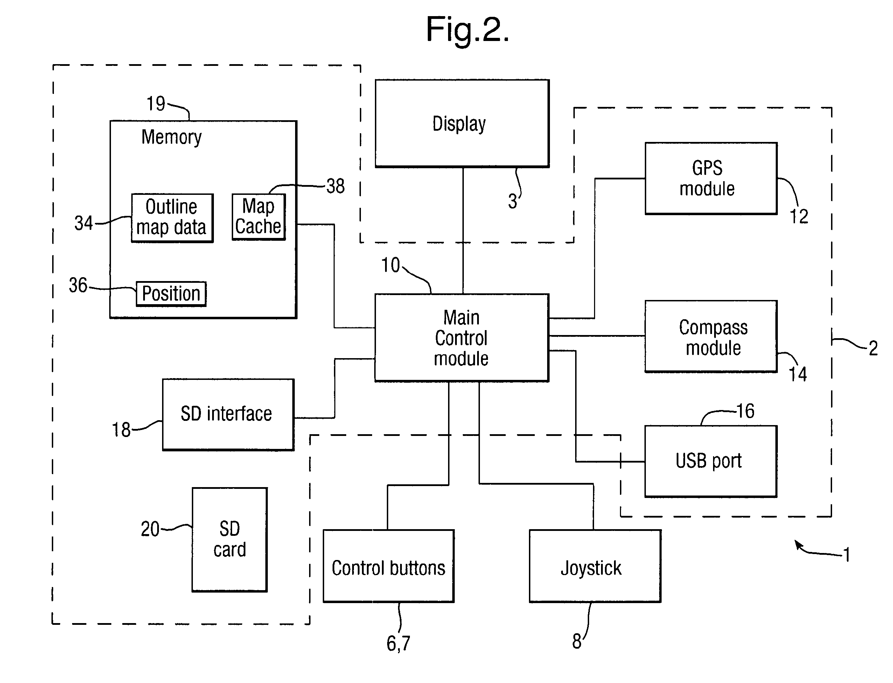

Figure 2 is a schematic block diagram of the main functional modules forming part of the mapping system 1. A main control module 10 is provided within the housing 2. The main control module 10 is arranged to receive control signals from the control buttons 6, 7 and the joystick 8 and output a display data to be displayed on the display screen 3.

A GPS module 12 including a GPS receiver and antenna is also provided within the housing 2. The GPS module 12 is connected to the main control module 10. When activated, the GPS module 12 is arranged to receive a GPS signal from a number of GPS satellite, interpret the received GPS signals to determine the current location of the mapping system 1 and pass this determined location to the main control module 10.

Also provided within the housing 2 is a compass module 14 which is also connected to the main control module 10. In this embodiment, the compass module 14 comprises a solid state electronic compass which is arranged to determine the orientation of the mapping system 1 and pass this information on to the main control module 10.

Also connected to the main control module 10 are a USB (Universal Serial Bus) Port 16, a secure digital card interface 18 and a memory 19. The secure digital interface 18 is arranged to be able to receive a secure digital card 20 and retain the secure digital card within the housing 2.

The memory 19 is arranged to store various items of data for enabling the mapping system 1 generate display data. In this embodiment this data comprises an outline vector map 34, position data 36, and decompressed map data which is stored within a map cache 38.

As will be described in detail later, the map data comprises image data for generating a high resolution image of a map which can be displayed on the display 3. This image data is such to represent the detailed features normally present on a high quality map. Additionally as will be explained, this image data is combined with label data obtained from the outline map data 34 so as to enable individual features on an area of map to be labelled in text.

The combination of the high resolution image from the map code 38 with labels 4 selected from the outline map date 34 enables an improved map to be displayed. The displayed map therefore differs from merely presenting a selected portion of a map from the map cache 38 to a user. This is because by utilising the outline vector map data 34 to select labels for a displayed portion of screen problems with identifying features in a display which on a conventional map would only be labelled on another part of the map can be avoided. Thus the system can be arranged to ensure that, for example, roads appearing in an image on a display screen are identified whereas in a conventional map whether a road is labelled with a name will often depend upon which portion of a map is being viewed.

The USB port 16 connected to the main control module 10 is such to receive a USB lead so as to enable the mapping system 1 3 receive further data from an external computer. This data is then passed via the main control module 10 to the SD interface 18 where data can be written and stored on to a secure digital card 20. Conversely the main control module 10 is arranged so as to be able read data from a secure digital card 20 inserted in the SD interface 18. Such data may either be passed out to an external computer via the USB Port 16 or alternatively may be stored in the memory 19 connected to the main control module 10.

### *Downloading of map data*

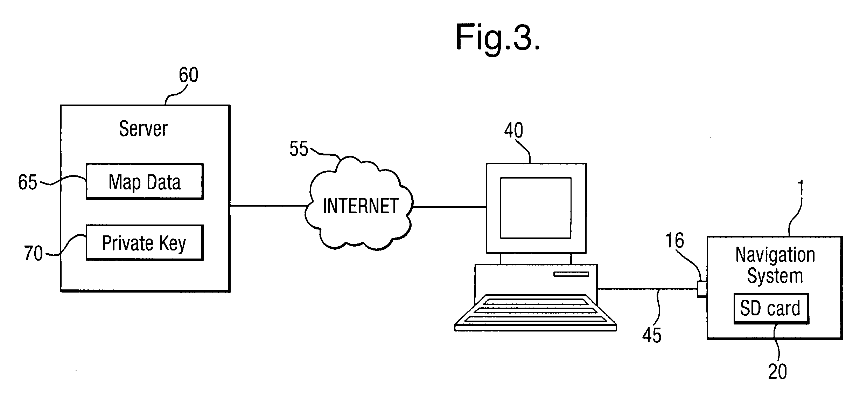

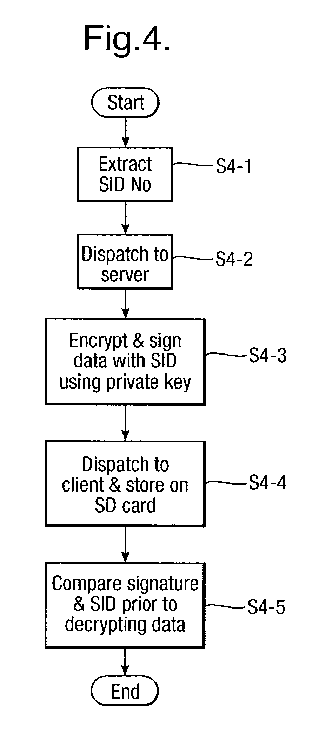

Prior to describing the functioning of the mapping system 1 in use, the downloading and storage of map data onto a secure digital card 20 using the mapping system 1 will first be described with reference to Figures 3 and 4.

Referring to Figure 3 which is a block diagram of apparatus for downloading map data into a secure digital card 20, when downloading data, the mapping system 1 is connected to a computer 40 via a USB interface lead 45 which is inserted to the USB port 16 of the mapping system 1. The computer 40 is then connected via the internet 55 to a remote server 60 which stores map data 65 and a private key 70 for encrypting map data.

Figure 4 is a flow diagram of the processing involved in downloading map data 65 from a remote server 60, when a user wishes to request a specific item of map data 65 from the server 60.

Referring to Figure 4, initially, the computer 40 sends a request via the USB interface lead 45 to the main control module 10 of the mapping system 1 asking the main control module 10 to extract (s4-1) a secure ID number from a secure digital card 20 on to which a map data is to be stored. This is achieved by the main control module 10 reading the secure ID from a secure digital card 20 inserted into the secure digital card interface 18 of the mapping system 1.

This secure ID number is then passed (S4-2) via the computer 40 and the internet 55 to a remote server 60 together with the identification of the specific item of map data 65 desired by the user.

When a secure ID number and map data request are received by the server 60, the server proceeds to encrypt and sign (s4-3) the selected map data 65 using the received secure ID number for the secure digital card inserted in the navigational system 1 and the private key data 70.

The encrypted and signed data is then (S4-4) transmitted back via the internet 55 and the computer 40 to the mapping system 1 where the encrypted data is stored with the memory of the secure digital card 20.

Subsequently, (s4-5) when encrypted data is to be utilised by the mapping system 1, the validity of the encrypted data can be checked by using the public key counterpart of the private key 70 to decrypt the signed data stored on the secure digital card 20. This will regenerate a copy of the secure ID number used originally with the private key 70. If this regenerated ID number corresponds to the ID number of the secure ID card 20 where the data is stored, this will indicate to the mapping system 1 that the encrypted map data stored directly onto the secure digital card 20 in response to a request received by the server 60.

Thus in this way by signing the received map data 65 using the secure ID number for the secure digital card 20, a user is able to copy map data on to a secure digital card 20 once. The user is, however, prevented from making further valid copies of the map data 65 on to other secure ID cards 20. This is because each secure ID card 20 stores its own unique secure ID number. Copying data directly between two secure ID cards will therefore cause a mismatch between the secure ID number on a card and the signed data stored on the card. Such copying can be rendered ineffective by arranging the mapping system 1 to prevent decryption of received map data in the event that such a mismatch is identified.

The above system is therefore suitable for distributing map data 65 in a controlled manner which subsequently prevents unauthorised copying of that map data 65 for other purposes. Although in this embodiment reference has been made to secure digital cards, it will be appreciated than any other non-volatile storage medium with a built in unique identification data could be utilised.

### *Use of mapping system*

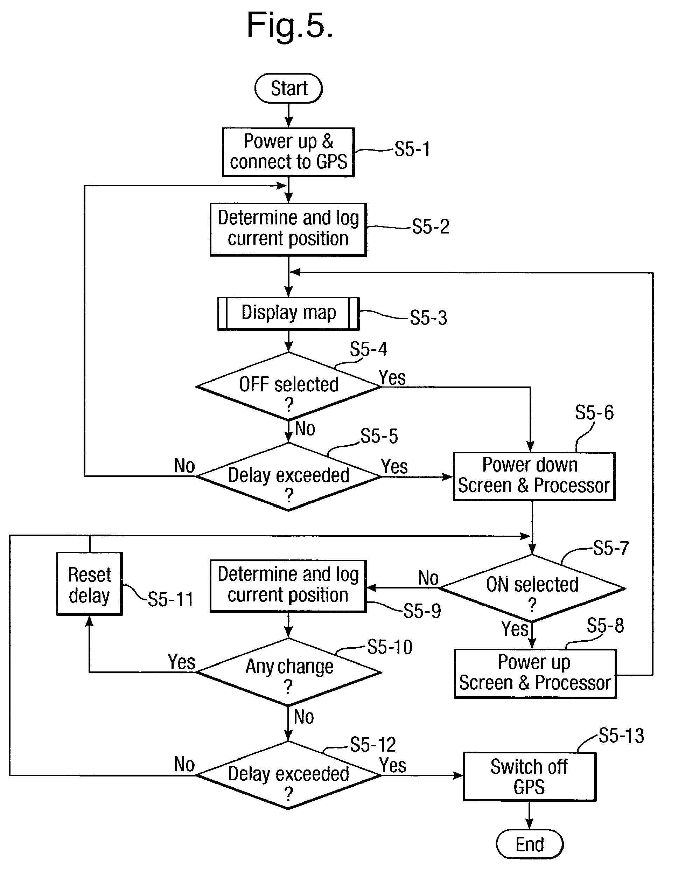

The use of the mapping system 1 in accordance with the present embodiment will now be described in detail with reference to Figures 5 - 7.

Referring to Figure 5, when the mapping system 1 is first switched on by pressing the on-off button 7 the main control module 10 initially (S5-1) causes the GPS module 12 to power up and initiate a connection to GPS satellite system. At the same time a back light for the display screen 3 is switched on so as to cause the display screen 3 to be active.

Having been powered up the GPS module 12 then awaits signals from the visible GPS satellites. Received GPS signals are then processed by the GPS module 12 and a current position for the mapping system 1 is determined (S5-2). This position is then transferred by the GPS module 12 via the main control module 10 to the memory 19 where it is stored as position data 36.

Having determined the current location of the mapping system 1, the main control module 10 then proceeds (S5-3) to select and generate display data to be displayed to a user.

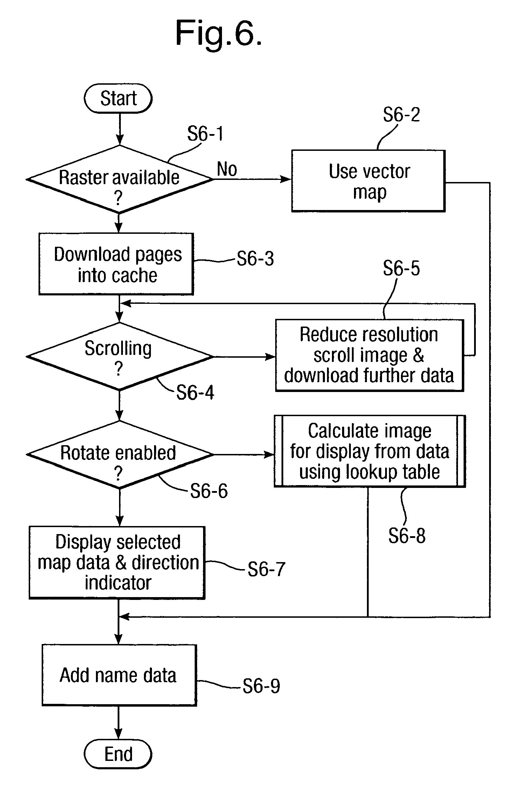

The processing undertaken by the main control module 10 to select and generate suitable display data will now be explained in detail with reference to Figure 6.

Referring to Figure 6, when determining data to be displayed on the display screen 3, the main control module 10 initially (S6-1) determines whether a raster map is available for display.

In this embodiment this is achieved by map data 65 transferred and recorded on to a secure digital card 20 including boundary data identify the extent of the area for which high resolution map data is available. Utilising, the latest item of position data 36 stored in the memory 19, the main control module 10 compares the location of the mapping system 1 as identified by this data with the boundary data for the map information stored on the secure digital card 20 currently inserted in the SD interface 18 of the mapping system 1.

If the location identified by the latest item of position data 36 is beyond the boundaries identified by boundary data stored on a secure digital card 20 or alternatively if no secure digital card 20 is present in the secure digital card interface 18, the main control module 10 proceeds (s6-2) to access a pre-stored outline map data 34 stored within the memory 19.

This pre-stored outline map data 34 is a low resolution vector map where outline route data is stored as vector data where roads and features are defined by a series of inter connected lines on a map which will enable the user to identify their general position based on the GPS signal. The resolution of the outline map data 34 could vary depending upon location. Thus, for example in the case of a mapping system 1 for use in the United Kingdom, outline map data 34 identifying the main roads in the UK could be provided, whereas outlines only of the other countries of world might be provided.

In this way by providing outline map data 34 covering the entire globe, the mapping system 1 is always able to provide some display data for display the display screen 3. At the same time the mapping system 1 is relieved from having to store large amounts of high definition data for areas unlikely to be of interest.

If the main control module 10 determines (S6-1) that the current position of the mapping system 1 as identified by the latest item of stored position data 36 is within the boundaries for which high resolution map data 65 is stored within the secure digital card 20, the main control module 10 then confirms that the signature on the secure digital card 20 corresponds with the signature of the encrypted map data stored on the card.

If this is the case, the main control module 10 then (S6-3) proceeds to decrypt and decompress a portion of the map data centred on the current position of the navigation device and stores the decrypted data within the map cache portion 38 of the memory 19. In this embodiment, the map data stored on a secure digital card comprises pixel image data which is compressed using conventional techniques. When a section of map data has been decrypted and decompresses, the main control module 10 causes decompressed image data for the current display screen together with display data representing portions of map immediately adjacent the currently displayed map to be stored in the map cache 38

The main control module 10 then (s6-4) determines whether or not the joystick 8 is being activated. If this is the case the main control module 10 proceeds (S6-5) scroll the map data in the opposite direction indicated to that indicated by the activation of the joystick 8. Thus for example when the joystick 8 is pushed to the right, the map scrolls to the left. At the same time the main control module 10 proceeds to decrypt further map data from the map data 65 stored in secure digital card 20 where this additional data corresponds to additional map data in the direction indicated by the joystick 8. The additional decrypted data is then stored in the map cache portion 38 of the memory 19.

By limiting the speed with which image data is scrolled to a speed that enables the main control module 10 to decrypt and store data within the map cache 38, this ensures that image data is continuously available as the image scrolls cross the display screen 3. In order to increase the responsiveness of the scrolling of the map using the joystick 8 when generating display data 38 during scrolling, the main control module 10 may generate display data at a lower resolution than the resolution of the decrypted map data within the map cache 38 when scrolling an image as due to the scrolling the reduction of resolution will be less apparent to a user. Alternatively, anti aliasing techniques which improve the apparent resolution of image data could be applied only when movement of the joystick has come to an end. Thus, avoiding such processing when due to the motion of an image, the increased resolution would not be apparent to the user.

If the main control module 10 detects that the joystick 8 is not being activated, the main control module 10 then (S6-6) determines the current mode for the mapping system 1.

In this embodiment the mapping system 1 is such to have two display modes, the mode in use being toggled by pressing mode button 6. In the first mode, map data is displayed in a conventional manner with North appearing at the top of the screen display screen 3 and an indicator appearing on the screen indicating the current orientation of the mapping system 1 as determined by the compass module 14. In a second mode, as will be described, rather than maintaining the orientation of the map data and varying the direction of a pointer indicating the current orientation of the mapping system 1, map data is manipulated so as to appear rotated with an orientation corresponding to the orientation of the mapping system 1.

If it is the case that the main control module 10 determines that the current mode of operation is to display map data orientated so that the top of the image appearing on the screen corresponds to North, main control module 10 causes to be sent to the display screen 3 display data corresponding to a section of map data stored within the map cache 38 centred upon a current position (i.e. either the position indicated by the latest stored item of position data 36 or an alternative position selected by virtue of moving the joystick 8). This map data is then displayed on the display screen 3 together with an indicator for indicating latest position 36 determined by the GPS module 12 as stored in memory 19. In this embodiment, this indicator comprises a pointer indicating the current orientation of the mapping system 1 as determined by the compass module 14.

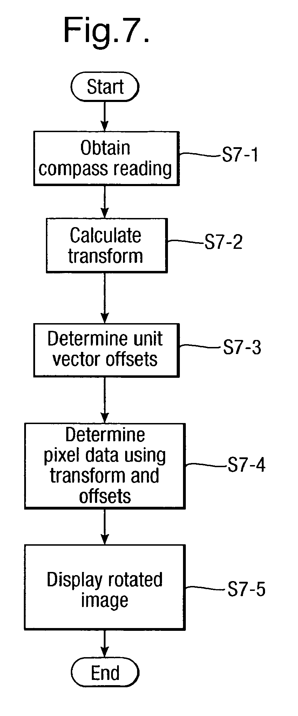

If, however, the main control module 10 determines (S6-6) that the mode selected using the mode button 6 is such to cause the mapping system 1 to display data which is orientated in the direction corresponding to the orientation of the mapping system 1 itself, the main control module 10 then utilises the map data stored in the map cache 38 and the rotate tables 32 to generate an appropriate screen display (s6-8) showing a rotated map as will now be described with reference to Figure 7.

Referring to Figure 7, when generating a display of map data orientated in an orientation corresponding to the orientation of the mapping system 1, initially (S7-1) the main control module 10 obtains a compass reading from the compass module 14 to determine the current orientation of the mapping system 1.

Having obtained a compass reading the main control module 10 then (S7-2) proceeds to calculate a transform for generating a rotated image.

More specifically a transform is calculated in the following form:

$$\begin{bmatrix} \cos\alpha \ \sin\alpha \\ -\sin\alpha \ \cos\alpha \end{bmatrix} \begin{bmatrix} Z\,0 \\ Z\,O \end{bmatrix}$$

where $\alpha$ is the angle representing the difference of the compass reading obtained from the compass module 14 compared with a reading indicating due north and Z is a zoom factor for mapping pixels in the rasta image data stored within the map cache 38 to pixels on the screen.

Once a transformation matrix has been calculated, the control module 10 then determines a set of two vector offsets applying the calculated transformation to a unit vector pointing in the x direction and unit vector pointing in the y direction respectively.

Pixel data for generating an image for display on the screen is then (S7-4) generated using the calculated transform and the determined vector offsets. More specifically the calculated transform is first of all applied to a vector indicating the difference between the centre point on an image and the pixel representing the top left hand corner of the image. This value is then used to identify a set of four pixels for representing pixel data on the top left hand corner of the image screen by adding the calculated difference to a pointer identifying the centre of the map stored within the map cache 38. A set of pixel data for the pixel representing the top left hand corner of the display is then determined utilising the pixel data in the map cache 38. In this embodiment this is done in one of two ways. When image data is being generated whilst movement of the navigation system 1 is being detected by, for example, a change in value of the angle obtained by the compass module 14, the position identified within the map cache 38 closest to the calculated point of value is determined. Thus for example if the calculated pointer corresponds to a position having x co-ordinates 37.4 and 38.9 the pixel at position 37 40 would be utilised to generate image data to represent the pixel in a top left hand corner of the screen. In contrast, if no motion is detected, a waited average value for pixel data from the map cache is utilised. Thus for example in the case of the same pointer, a value corresponding to the following waited sum would be used as pixel data for the pixel represented in the top left hand corner of the display:

$$0.6\,x\,0.1\,[37,38] + 0.6\,x\,0.9\,[37,39] + 0.4\,x\,0.1\,[38,38] + 0.4\,x\,0.9\,[38,39]$$

Thus in this way a bilateral filter is utilised to calculate the pixel values where the contributions of individual pixels and the map data in the map cache 38 are proportionate to the distance of the centre of the contributing pixels relative to the position as indicated by the pointer.

Having calculated pixel data for the pixel corresponding to the top left hand corner of the screen, the calculated unit vector offsets are then utilised to identify the portions of the map cache data 38 to be utilised to generate the remaining image data. This is achieved by adding the calculated vector offsets to the pointer value for the top left hand corner a number of times corresponding to the relative location of the pixel in the image and then generating pixel data based upon the revised pointer value. Thus in the case of the pixel immediately to the right of the top left hand corner pixel a single unit vector offset representing the unit vector offset for one pixel in the x direction would be added to the calculated point of value for the top left hand corner pixel. This operation is repeated until pixel data for each individual pixel in the image to be displayed has been calculated at which point a rasta image of rotated display data can then be caused to be displayed on the display screen 3.

Finally, after standard background map data has been generated (S6-7) or alternatively rotated background map data has been generated (S6-8) or a vector background map has been generated (S6-1) the main control module 10 then (S6-9) proceeds to add a series of labels 4 to the image to be displayed by the display screen 3.

In this embodiment stored as part of the outline map data 34 in the memory 19 is label data for all potential points of interest for example, roads, hills, town names etc. Each item of label data comprises an item of text data being the text to be displayed as a label on the map, size data indicating the size of the label when it is displayed and a series of map co-ordinates identifying possible positions which might be associated with the label. Thus for example in the case of a label associated with a road, these position co-ordinates will correspond to various points along the road. In contrast, for a label associated with a geographical location, the co-ordinates would correspond to points identifying the area covered by the geographical location.

When generating the final image for display on the display screen 3, the main control module 10 then proceeds to scan the positions corresponding to the locations displayed on the display screen starting from the top left hand corner of the display. Whenever a point associated with the co-ordinates of an item of location data is encountered, the label 4 corresponding to that point is caused to be displayed.

The main control module 10 then continues to scan the area represented by the map, omitting the area now covered by a displayed label 4 and any label data associated with a label which has already been added to the display. In this way, the main control module 10 proceeds to generate display including labels for features of interest which are all correctly orientated for easy reading and which do not overlap.

Returning to Figure 5, after having displayed (S5-3) selected map data on the display screen 3, the main control module 10 then, (S5-4) determines whether the on/off button 7 has been depressed.

If this is not the case, the main control module 10 then (S5-5) determines whether a delay time has been exceeded. If this is not the case the mapping system 1 proceeds to determine and log its current position (S5-2) and display updated map data (S5-3) before checking again whether the on/off button 7 has been depressed.

In this way the mapping system 1 is caused to display a map and update the map appropriately whilst a user may be viewing the map. As is noted in the introduction of the specification, in order to minimise the weight of the mapping system 1, it is important that the power consumption of the mapping system 1 is carefully controlled. To that end, providing an off button and also automatically powering down the system after a delay, the drain on energy resources is minimised. Further as will be explained the powering down of the mapping system 1 is also arranged to further reduce energy demands.

After either a user depresses (S5-3) the on/off button 7 or alternatively after a pre-determined time delay (S5-5) has passed, the main control module 10 then proceeds (S5-6) to power down the display screen 3 and the main processor for the navigation device 1. In this way the power consumption of the navigation device is reduced. In this way by powering up and powering down the screen and processor response to the on/off button, a user is given the impression that the unit is switched off by depressing this button as when the button is depressed the screen switches off.

The main control module 10 however, will maintain some minimal functions. In particular, the main control module 10 will continue to monitor the control buttons to see whether the on/off 7 is pressed, and the GPS module 12 is maintained in an active state so as to continue to receive GPS signals.

Once the display screen 3 and the main processor have been powered down, if (S5-7) the main control module 10 detects that the on/off button 7 has been depressed, the main control module 10 responds by causing the display screen 3 and the main processor to be reactivated (S5-8). The main control module 10 then (S5-3) proceeds to generate appropriate map data as previously been described.

If the on/off button 7 is not depressed (S5-7) the GPS module 12 which remains active, periodically determines and logs the current position of the mapping system 1.

When logging position in this mode, the GPS module 12 determines at each time a position is calculated, whether (S5-10) any change in position has occurred compared with the previous item of position data 36 stored in the memory. If the position of the mapping system 1 has changed beyond the margin of error inherent in calculating a position from GPS signals then a new item of the position data is stored in the memory 19 and a delay time is reset (S5-11). Thus in this way even when the mapping system 1 is ostensibly powered down, the mapping system 1 can continue to track the progress of a walker using the mapping system 1 and store a series of items of position data in the memory 19.

When determining whether any change of position of the mapping system has occurred, it is important to account for any apparent variations arising from the errors due to the visibility of GPS satellites. Generally, the accuracy of GPS positioning is dependent both upon the number of satellites visible to a GPS unit (with positioning accuracy increasing with the number of visible satellites) and the relative positions of those satellites and the positioning unit. As such an apparent GPS position may appear to wander by a number of tens of meters even when no movement is occurring. In order to avoid such variation being accounted for as actual motion, a comparison between a current and previous position is made and the distance between the two is compared with a threshold (say for example 50m) and a new item of position data stored and the delay is reset only if the determined difference is greater than this "error" threshold.

If the GPS module 12 determines that the mapping system 1 has come to a rest because the current position of the system corresponds to the latest item of position data 36 stored in the memory 19, the GPS module 12 (S5-12) determines whether a delay period has been exceeded. If this is not the case the main control module 10 continues (S5-7) to monitor whether the on/off 7 is depressed and the GPS module 12 continues (S5-9) (S5-11) to periodically check and record the position of the mapping system 1 and reset a delay counter when movement is determined to have occurred.

Eventually when the mapping system 1 determines that no change in position is occurring and no change in position has occurred for the pre-determined delay period (S5-12) finally the GPS module 12 is powered down.

It has been determined that a significant portion of the energy requirement of a GPS module 12 arises due to the need for the GPS module 12 to acquire an initial set of GPS signals from visible GPS satellites. In the above way, by delaying switching off the GPS module 12 until the mapping system 1 has come to a rest for a predetermined period of time, the mapping system 1 can both to continue to log changes in position of a user of a mapping system 1 and also minimise its power consumption since the communication links between the GPS module 12 and the navigation satellite are maintained during that period.

## FURTHER MODIFICATIONS AND ALTERNATIVE EMBODIMENTS

In the above described embodiment, a system has been described in which either a vector based map or a raster map is displayed to a user. It would be appreciated that the other embodiments maps of different scales could be available so that a user could view wider or narrower areas of the map displayed on the display screen 3 and zoom in on an area of interest.

It would also be appreciated that in addition to label data other forms of data relating to certain areas of a map could be stored and made available to a user. Thus for example photographs, text or recorded sounds could be stored in relation to points of interest on a map and the user could select those areas to obtain the stored commentary and/or pictures.

Further in addition to storing data identifying points of interest, in addition to the map data, a series of way points identifying a route to be walked could be stored as part of data associated with map. These way points can then be indicated as points of interest on the map to a user to guide them along a selected route.

In the system described above position data 36 is described as being stored in the memory 19 of the mapping system 1. In embodiments the present invention, markers indicating the route taken by a user could be displayed as part of the map display.

In addition to displaying the route taken by a user, the position data 36 could also be used to identify changes in altitude taken by the user. One way in which this could be done would be to calculate the altitude of the mapping system 1 from the GPS signals received by the GPS module 12. Such altitude measurements are, however, unreliable. A preferred alternative would be to store as part of the map data 65, in addition to data for display, data associating points on a map with heights. In use, the GPS signals could then identify that the mapping system 1 was located at a particular position. The stored height data could be used as a look-up table to establish the altitude on the ground at that point. Where the position of the mapping system 1 did not exactly coincide with a position for which height data was stored, the height could be interpolated from height data associated with nearby. After having logged the variation in height of the mapping system 1, this data could be displayed to a user or alternatively the route and altitude data could be downloaded on to a computer 40 for subsequent display.

In the above embodiment the downloading of data onto a secure digital card 20 has been described. It will be appreciated that the exact form of storage used is not essential and that other non-volatile storage formats storing unique data identifiers could be used. Such non-volatile storage could either be formatted to provide a unique identifier or key or alternatively such a unique identifier or key could be generated by the mapping system itself and recorded on a non-volatile recording device. The identifier or key could then be combined with map data and a private key at a remote server in the manner previously described to link map with a specific non-volatile recording device.

**Claims**

1. A mapping system comprising:

   a positioning module operable to receive positioning signals and determine a current position for the mapping system;
   a mapping module operable to process a determined current position for the mapping system and select map data for display; and
   a display screen operable to display an image corresponding to selected map data selected by said mapping module,

   **characterized in that** said mapping system further comprises:

   a power management module responsive to receipt of a power off signal to:

      power off said display screen;
      cause said positioning module to maintain a positional lock to receive positioning signals and periodically determine a current location for said mapping system; and
      instruct said positioning module to power off when said positioning module indicates that the location of said mapping system has not changed significantly for more than a predetermined length of time.

2. A mapping system in accordance with claim 1 further comprising:

   an activation button, responsive to user activation to generate a power off signal.

3. A mapping system in accordance with claim 1or 2 wherein said mapping system is arranged to generate a power off signal in response to the mapping system not receiving user input for a predetermined period of time.

4. A mapping system in accordance with claim 1, 2 or 3 wherein said positioning module comprises a GPS module operable to receive positioning signals from one or more GPS satellites.

5. A mapping system further comprising a memory wherein said mapping module is operable to store data identifying said periodic determined current positions in a memory.

6. A mapping system wherein said mapping module comprises:

   a low resolution map module operable to generate a low resolution map ; and
   a high resolution map module operable to generate high resolution map illustrative of an area smaller than the area illustrated by said low resolution map,

   wherein said mapping module is operable to generate map data for display using said high resolution map module if a current selected positions corresponds to a position illustrated by said high resolution map.

7. A mapping system in accordance with claim 6 wherein said mapping system is operable to select the determined current position for said navigation device as a current selected position.

8. A mapping system in accordance with any preceding claim wherein said navigation device further comprises a compass module operable to determine the current orientation of said mapping system, wherein said mapping module is operable to process stored map data representative of a high resolution map so as to generate display data wherein displayed map data is orientated on said display screen in an orientation selected on the basis of a current orientation determined by said compass module.

9. A method of storing map data on a non-volatile storage device, the method comprising:

   extracting secure identification data from a non-volatile storage device storing secure identification data;
   dispatching said secure identification data together with a request identifying an item of map data to a remote server;
   generating, at said remote server, in response to receipt of secure identification data and a request identifying an item of map data:

      encrypted map data corresponding to a requested item of map data; and
      signature data generated using said encrypted map data, a private encryption key and said received secure identification data; and
      storing said encrypted map data and said signature data on said non-volatile storage device.

10. A method in accordance with claim 9 further comprising:

    in response to a request to decrypt encrypted map data stored on a digital card:

       extracting secure identification data from a non-volatile storage device storing encrypted map data and signature data;
       utilising a public key to determine data utilized together with a private encryption key and stored encrypted map data to generate the stored signature data; and
       decrypting said encrypted map data only if the secure identification data on a non-volatile storage device corresponds to data utilised to generate said stored signature data using said encrypted map data and said private encryption key.

11. A mapping system comprising:

    a mapping module operable to process a determined current position for the mapping system and select map data for display; and
    a display screen operable to display an image corresponding to selected map data selected by said mapping module,

    **characterized in that** said mapping system further comprises:

       means for extracting secure identification data from a non-volatile storage device storing secure identification data and dispatching said secure identification data together with a request identifying an item of map data to a remote server; and

means responsive to a request to decrypt encrypted map data stored on a digital card to:

extract secure identification data from a non-volatile storage device storing encrypted map data and signature data;

utilise a public key to determine data utilized together with a private encryption key and stored encrypted map data to generate the stored signature data; and

decrypt said encrypted map data stored on a non-volatile storage device only if the secure identification data on a non-volatile storage device corresponds to data utilised to generate said stored signature data using said encrypted map data and said private encryption key.

**12.** A mapping system comprising:

a positioning module operable to receive positioning signals and determine a current position for the mapping system;

a map store storing map data defining a raster image of a map;

a mapping module operable to process a determined current position for the mapping system and select map data for display;

a display screen operable to display an image corresponding to selected map data selected by said mapping module; and

a compass module operable to determine the current orientation of said mapping system, wherein said mapping module is operable to process map data so as to generate display data wherein displayed map data is orientated on said display screen in an orientation selected on the basis of a current orientation determined by said compass module.

**13.** A mapping system comprising:

a first data store operable to store map data;

a second data store;

a mapping module operable to generate display data utilising data stored in said second data store; and

a user interface operable to enable a user to select a location, wherein said second data store is operable to store map data for an area greater than the area for which said mapping module is operable to generate display data, said mapping system being arranged so that said mapping module is operable to generate display data illustrating a scrolling map based on data stored in said second data store wherein the speed of scrolling is selected so that said speed does not exceed the speed with which data stored in said first data store can be transferred from said first data store to said second data store.

**14.** A mapping system in accordance with claim 13, wherein said first data store is operable to store map data in an encrypted form and the speed of scrolling is selected so that said speed does not exceed the speed with which data stored in said first data store can be decrypted and transferred from said first data store to said second data store.

**15.** A mapping system comprising:

a positioning module operable to receive positioning signals and determine a current position for the mapping system;

a mapping module operable to process a determined current position for the mapping system and select map data for display on the basis of said determination; and

a display screen operable to display an image corresponding to selected map data selected by said mapping module,

**characterized in that** said mapping system further comprises:

a first map store operable to store data defining an image of a map for display on the display screen; and

a second map store operable to store data associating locations with label data,

wherein said mapping module is operable to select map data for display by selecting a portion of an image of a map from data stored in said first map store and combining said image data with label data for areas illustrated by said selected portion of image data associated with label data stored in said second map store.

**16.** A mapping system in accordance with claim 15 wherein said label data associates locations with image, video or sound files wherein said mapping system is operable to output data associated with a location when a label associated with the location on a screen display is selected.

**17.** A mapping system in accordance with claim 16 wherein said mapping system comprise a user interface enabling a user to select items of label data.

**18.** A mapping system in accordance with claim 16 wherein said mapping system is arranged to output data associated with a location when the current position for the mapping system corresponds with a location associated with label data.

**19.** A mapping system in accordance with any of claims 15-18, wherein said mapping module is operable to select label data for display, wherein label data is selected so that label data included in a display does not overlap.

**20.** A mapping system in accordance with claim 19 wherein said label data includes data associating multiple locations with the same label data wherein said mapping module is operable to select the position of display of label data on the basis of said areas and on the basis of the extent of other items of label data to be displayed so that that label data included in a display does not overlap.

**21.** A mapping system in accordance with any of claims 15-20 wherein said second map store is operable to store data associating locations with label data in the form of a vector map.

# Fig.1.

# Fig.2.

EP 1 953 501 A2

# Fig.3.

EP 1 953 501 A2

# Fig.4.

```
        ( Start )
            |
            v
    ┌──────────────┐
    │   Extract    │ ── S4-1
    │   SID No     │
    └──────────────┘
            |
            v
    ┌──────────────┐
    │ Dispatch to  │ ── S4-2
    │   server     │
    └──────────────┘
            |
            v
    ┌──────────────┐
    │ Encrypt & sign│
    │ data with SID │ ── S4-3
    │using private key│
    └──────────────┘
            |
            v
    ┌──────────────┐
    │ Dispatch to  │
    │client & store on│ ── S4-4
    │   SD card    │
    └──────────────┘
            |
            v
    ┌──────────────┐
    │Compare signature│
    │ & SID prior to │ ── S4-5
    │ decrypting data │
    └──────────────┘
            |
            v
        ( End )
```

# Fig.5.

```
                    ┌─────────┐
                    │  Start  │
                    └─────────┘
                         │
                         ▼
              ┌──────────────────┐
              │   Power up &     │──── S5-1
              │ connect to GPS   │
              └──────────────────┘
                         │
                         ▼
              ┌──────────────────┐
              │ Determine and log│──── S5-2
              │ current position │
              └──────────────────┘
                         │
                         ▼
              ┌──────────────────┐
              ││  Display map    │──── S5-3
              └──────────────────┘
                         │      S5-4
                         ▼
                   ╱  OFF selected ╲    Yes
                   ╲      ?        ╱ ──────────────┐
                     │ No    S5-5                   │
                     ▼                              │     S5-6
         No    ╱  Delay exceeded  ╲    Yes     ┌──────────────────┐
        ◄──────╲       ?          ╱ ─────────► │   Power down     │
                                              │ Screen & Processor │
                                              └──────────────────┘
                                                        │
   ┌─────────┐  ┌──────────────────┐      S5-7          ▼
   │  Reset  │  │ Determine and log│   No   ╱  ON selected ╲
   │  delay  │  │ current position │ ◄──────╲      ?       ╱
   └─────────┘  └──────────────────┘         │ Yes    S5-8
     S5-11              S5-9                   ▼
                         │            ┌──────────────────┐
              Yes        ▼            │    Power up      │
        ◄──────╱  Any change ╲        │ Screen & Processor│
               ╲      ?      ╱  S5-10 └──────────────────┘
                   │ No
                   ▼                         S5-12
         No   ╱  Delay exceeded ╲   Yes   ┌──────────────────┐
        ◄─────╲       ?         ╱ ──────► │   Switch off     │──── S5-13
                                          │      GPS         │
                                          └──────────────────┘
                                                   │
                                                   ▼
                                              ┌─────────┐
                                              │   End   │
                                              └─────────┘
```

17

# Fig.6.

```
                    ( Start )
                        |
                        |  S6-1                         S6-2
                        v
              < Raster available >  No       Use vector
              <        ?         >  ----->       map
                        |                          |
                        | Yes                      |
                        v                          |
              Download pages  -- S6-3              |
                into cache                         |
                        |                          |
                        v                  S6-5    |
              < Scrolling >          Reduce resolution
              <    ?     >  ------>   scroll image &
                   |   S6-4          download further data
                   |
                   v                  Calculate image
              < Rotate enabled >     for display from data
              <      ?        >----> using lookup table
                   |   S6-6                   |
                   |                        S6-8
                   v
              Display selected
            map data & direction  -- S6-7
                indicator
                   |
                   v
              Add name data  -- S6-9
                   |
                   v
                 ( End )
```

# Fig.7.

Start

Obtain
compass reading — S7-1

Calculate
transform — S7-2

Determine unit
vector offsets — S7-3

Determine
pixel data using
transform and
offsets — S7-4

Display rotated
image — S7-5

End